# EUROPÄISCHE PATENTSCHRIFT

(11) **EP 2 791 939 B1**
(45) Veröffentlichungstag und Bekanntmachung des Hinweises auf die Patenterteilung: **01.04.2020**
(21) Anmeldenummer: 12809116.2
(22) Anmeldetag: 11.12.2012
(51) Int. Cl.: G11B 27/034, G11B 27/34

(54) **STREAMING-BASIERTES MEDIEN-SYSTEM**
STREAM-BASED MEDIA SYSTEM
SYSTÈME DE DIFFUSION MULTIMÉDIA EN CONTINU

(30) Priorität: 12.12.2011 DE 102011120911
(43) Veröffentlichungstag der Anmeldung: 22.10.2014
(73) Patentinhaber: FileCAST Media GmbH, 83527 Haag in Oberbayern (DE)
(72) Erfinder: STROBL, Thomas, 83527 Haag in Oberbayern (DE); WÄCHTER, Alexander, 85452 Moosinning (DE)
(74) Vertreter: Hermann, Felix
(86) Internationale Anmeldenummer: PCT/EP2012/005112
(87) Internationale Veröffentlichungsnummer: WO 2013/087193

(56) Entgegenhaltungen:
- EP-A2- 1 713 074
- WO-A1-97/39411
- WO-A2-98/37558
- US-A- 5 642 285
- US-A1- 2002 146 236
- US-A1- 2006 156 219
- US-A1- 2007 009 231
- OLIVER MORGAN (SMPTE) ET AL: "SMPTE 330M Unique Material Identifier", 51. MPEG MEETING; 20-03-2000 - 24-03-2000; NOORDWIJKERHOUT; (MOTION PICTURE EXPERT GROUP OR ISO/IEC JTC1/SC29/WG11),, no. M5925, 14 March 2000 (2000-03-14), XP030035102,
- Michael Bergeron: "56 // SMPTE Motion Imaging Journal TECHNICAL PAPER File-Based Sports Production File-Based Media", , 1 May 2010 (2010-05-01), XP055592079, Retrieved from the Internet: URL:https://ieeexplore.ieee.org/stamp/stam p.jsp?tp=&arnumber=7270152 [retrieved on 2019-05-27]
- BURGHARDT J: "EssenceMark: Ein textbasierender Videomarker", FKT FERNSEH UND KINOTECHNIK, FACHVERLAG SCHIELE & SCHON GMBH., BERLIN, DE, vol. 61, no. 1-2, 1 January 2007 (2007-01-01), pages 35-41, XP001550538, ISSN: 1430-9947
- Anonymous: "Avid Interplay Access User's Guide Version 2.4", , 21 November 2011 (2011-11-21), page 67,339, XP055592093, Retrieved from the Internet: URL:http://www.ctmsolutions.com/www/servic ing/downloads-techniques/avid/interplay-pa m-production-asset-manager/interplay-2/330 -interplayaccessugv24.html [retrieved on 2019-05-27]

## Beschreibung

### TECHNISCHES GEBIET DER ERFINDUNG

Die Erfindung betrifft ein System zur Ver- bzw. Bearbeitung von Medieninhalten und entsprechende Verfahren zur Verschlagwortung, Speicherung und zum Schnitt und Distribution von Mediendaten.

### TECHNISCHER HINTERGRUND DER ERFINDUNG

### Media Asset Management (MAM) Systeme

Als Media Asset Management (MAM) Systeme oder auch als Digital Asset Management (DAM) Systeme bezeichnete Systeme ermöglichen ein effizientes Management von multimedialen Informationen (Medieninhalten) und erlauben so, einen wirtschaftlichen Nutzen und Wettbewerbsvorteile zu erzielen.

Ein "Media Asset" bezeichnet typischerweise eine Form von Inhalten (Content), die in strukturierter, schwach strukturierter und unstrukturierter Form, in elektronischen Systemen zur Nutzung bereitgestellt wird. Ein "Media Asset" besteht aus multimedialen unstrukturierten Informationsobjekten (wie Audio und Video) und aus strukturierten Metainformationen. Durch das Hinzufügen der strukturierten Metadaten wird aus einem Medieninformationsobjekt, welches lediglich Informationen darstellt, ein "wertbehaftetes Asset", welches verfügbar, recherchierbar, wieder verwendbar und auch kommerziell handelbar wird. Die strukturierten Metadaten beinhalten beispielsweise Informationen zum Autor, zu Urheberrechten, Erstellungsdatum und Formatinformationen sowie Inhaltsbeschreibungen, technische und inhaltliche Einordnungen oder Bewertungen.

Ein MAM System verwaltet beliebige Inhalte (Media Assets) über Metadaten und Datenbanken und kontrolliert die Zugriffe und Nutzung in Verbindung mit einem digitalten Rechtemanagement (Digital Rights Management - DRM) und Buchhaltungssystem (Accounting System). MAM Systeme sind auf hohe Skalierbarkeit zur Speicherung sehr großer Datenmengen ausgelegt und für die Konvertierung der Inhalte eingerichtet, um die gespeicherten Inhalte in unterschiedlichen Formaten für die Online-Nutzung und die Distribution zur Verfügung zu stellen.

Das MAM System sorgt für die Aufnahme, Speicherung, Kategorisierung, Indizierung und Bereitstellung von Media Assets mit der Prämisse, eine hohe Bearbeitungsgeschwindigkeit und eine optimale Wiederverwendung zu ermöglichen. Zu der Grundausstattung eines MAM Systems zählen Funktionen wie Verschlagwortung und Indizierung, Mechanismen zur Datensicherheit und Zugriffskontrolle, medienspezifisches Datenmanagement, komplexe Suchfunktionen über Metadaten sowie automatische Bildinhaltserkennung, Unterstützung des Workflows bei der Medienproduktion, Versionsmanagement und Verwaltung sowie das Management von Urheberrechten, digitale Signaturen, Wasserzeichen und Lizenzen.

### Verarbeitung von Mediendaten

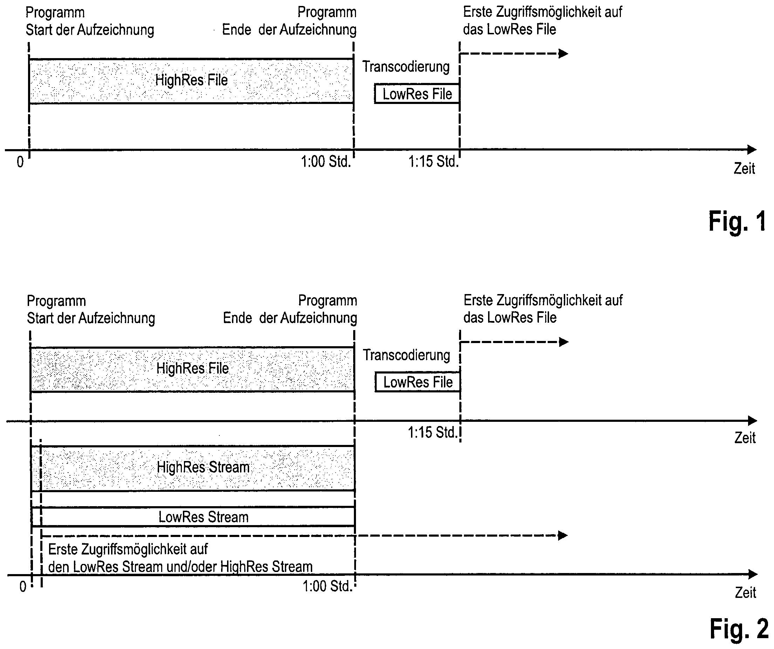

Es gibt verschiedene Möglichkeiten Bilddaten zu verarbeiten. Wie in Fig. 1 dargestellt, erstellen herkömmlichen Systeme aus einem Videosignal typischerweise zunächst eine Medien-Datei in einem hoch auflösenden (high resolution - HiRes) Dateiformat, wie zum Beispiel ProRes 4:2:2 HD, DNX HD, etc. In Schnittsystemen wird beim Schnitt eines Beitrags/Programms eine Schnittliste basierend auf dem hoch auflösenden Bild- und Tonmaterial erstellt.

Nachdem die Mediendatei (HighRes File) erstellt und im Speicher abgelegt wurde, beginnt ein Prozess des Renderns und des Transcodierens, um aus diesem hoch auflösenden Format der Datei eine "niedrig" auflösende Datei zu erzeugen, insbesondere um die Mediendatei beispielsweise auch über das Internet zugänglich zu machen. Das Resultat wird im Fachjargon auch als niedrig auflösende (low resolution - LoRes) Proxydatei bezeichnet (LowRes File), die zum Sichten und Bearbeiten im Netzwerk eingesetzt wird. Diese niedrig auflösenden Medien-Dateien codieren die Mediendaten zum Beispiel mit Hilfe eines H.264 Codecs.

Dieser Transcodierungsprozess dauert ca. 1/4 bis zu 1/6 der Zeit, den die Medien-Daten (z.B. der Film oder allgemeiner eine Aufzeichnung) in der hohen Auflösung zum Abspielen in Realzeit dauern. Dieser Prozess nimmt viel Rechenleistung in Anspruch, da ein Transcodierungsprozess intern alle Daten zuerst decodieren und anschließend und mit einem anderen, niedrig auflösenden Codec codieren (z. B. Transcodierung von einem XD CAM HD Codec in einen H.264 Codec) muss. Normalerweise wird die gesamte Rechenleistung des Rechners, der eine solche Transcodierung ausführt, genutzt und blockiert. Der niedrig auflösende Medieninhalt ist erst nach dem Transcodieren als LoRes Dateien zum Beispiel via Internet oder im Netzwerk (z.B. LAN) einzusehen. Ferner bedeutet dies auch, dass für den Fall, dass ein bestimmtes Material der hoch auflösenden Medien-Datei an einem anderen Ort verwendet werden soll, die hoch auflösenden Medien-Datei zunächst - beispielsweise mittels eines Satelliten-Feeds - an den Zielort übertragen werden muss und entsprechend riesige Datenmengen bewegt werden müssen.

Die WO 97/39411 offenbart ein digitales Multimedia-Newsroom-Produktionssystem, das es Benutzern des Systems ermöglicht, Multimedia-Inhalte zu erstellen. Das System beinhaltet eine Multimedia-Erfassungs- und Codierungssystem, das Multimediadaten erfasst, und im wesentlichen gleichzeitig eine erste komprimierte Version der Multimediadaten mit einer ersten Auflösung und eine zweite komprimierte Version der Multimediadaten mit einer zweiten Auflösung erzeugt. Ferner umfasst das System ein Multimedia-Speichersystem, das die Multimedia-Informationen einschließlich der ersten und zweiten komprimierten Version der Multimediadaten speichert und and ein Videobearbeitungs- und Wiedergabesystem gekoppelt ist. Auf Teile der codierten Version kann mit einer Verzögerung von maximal 5 Sekunden von dem Zeitpunkt an zugegriffen werden, an dem die Multimediadaten zum ersten Mal an den Eingang geliefert werden.

Die US 2002/8146236 A1 betrifft ein Verfahren, ein System und Programmprodukt zum Spezifizieren einer Auswahl von Inhaltssegmenten, die in verschiedenen Formaten gespeichert werden. Beim Codierungsprozess wird sichergestellt, dass die Aufnahmezeitcodes so genau wie möglich übereinstimmen.

Die EP 1 713 074 A2 beschreibt ein System unf Verfahren, mit dem Videoinhalte innerhalb kürzerer Zeitspannen aufgezeichnet und bearbeitet werden können. Ein Rechner streamt dabei niedrig aufgelösete Proxy-Videoinhalte und ermöglicht das Setzen von Merkierungen an beliebiger Stelle der Proxy-Videoinhalte.

Die US 2006/0156219 A1 offenbart sofortige Proxy-Logging von Live-Feeds, das bildgenaue Protokollieren und Bearbeiten von Proxys sowie das Bearbeiten von Remote-Proxys.

Die US 2007/0009231 A1 betrifft ein System in dem korrespondierende Videodateien und Metadatendateien eine identische Kennung aufweisen.

Die WO 98/37558 beschreibt eine doppelte Aufzeichnung von Bilder: von jedem aufzunehmenden Bild wird eine Version mit voller Auflösung zusammen mit einer Version mit stark reduzierter Auflösung aufgezeichnet, wobei ein Bild mit voller Auflösung und das entsprechende Bild mit niedriger Auflösung mit entsprechenden Identifikationsnummern bereitgestellt werden. Während des Einlesens von Bildern in den Bearbeitungscomputer werden die ursprünglichen Bilder mit niedriger Auflösung wiedergegeben, was auch den Vorteil hat, dass die Bitrate beim Einlesen in den Computerspeicher vergleichsweise niedrig ist. Schließlich werden die vom Benutzer ausgewählten Bearbeitungsbefehle für die ursprünglichen Bilder mit hoher Auflösung ausgeführt.

BERGERON, Michael: "File-Based Sports Production", SMPTE Motion Imaging Journal, Mai/ Juni 2010, Seiten 56-63 (XP055592079), beschreibt Konzepte Datei-basierter Sportproduktion. Eine Kombination aus Metadaten, Audio, Proxy Videos und hochauflösende Videos werden als Medien "Goo" bezeichnet. Diese Elemente sind durch einen gemeinsamen Timecode verbunden.

EssenceMarks wurden beschrieben in BURGHARDT J: "EssenceMark: Ein textbasierender Videomarker", FKT Fernseh und Kinotechnik, Fachverlag Schiele & Schon GmbH., Berlin, DE, Bd. 61, Nr. 1-2, 1. Januar 2007 (2007-01-01), Seiten 35-41, (XP001550538). Eine EssenceMarkTabelle verbindet Metadaten mit individuellen Videoframes eines Videoclips mittels einer Videoclip-kennung und Timecodes.

Die synchrone Aufzeichnung von Video- und Messdaten in einer Datenbank wird von US 5642285 A beschrieben. Die Messdaten werden mittels Timecodes korrespondierenden Videobildern zugeordnet.

### Zusammenfassung der Erfindung

Eine Aufgabe der Erfindung ist es, ein System vorzuschlagen, das es ermöglicht, binnen wenigen Sekunden nach dem Aufzeichnungsbeginn der Mediendaten auf die Mediendaten, zuzugreifen, egal wo sie sich auf der Welt befinden. Insbesondere ist es wünschenswert, dass das System bereits wenige Sekunden nach dem Aufzeichnungsbeginn die Sichtung und Weiterverarbeitung der Mediendaten ermöglicht.

Gemäß einem Aspekt der Erfindung wird aus den aufgezeichneten Mediendaten, die beispielsweise als digitales hoch auflösendes Videosignal vorliegen, mit einem hoch auflösenden Codec einen hoch auflösenden Medienstrom (HiRes media stream) erzeugt und gleichzeitig aus den gleichen aufgezeichneten Mediendaten einen niedrig auflösenden Medienstrom (LoRes media stream) mittels eines niedrig auflösenden Codec erzeugt, auf die dann über das Internet oder ein Netzwerk unmittelbar zugegriffen werden kann. Diese Medienströme können auch als eine anwachsende Datei betrachtet werden, da kontinuierlich neu codierte Mediendaten hinzu kommen. Als Codec für den hoch auflösenden Medienstrom kann beispielsweise ein dateibasiertes Format zur elektronischen Berichterstattung wie XD CAM HD, verwendet werden, als Codec für den niedrig auslösenden Medienstrom beispielsweise ein H.264 Codec, MPEG2 Codec oder ein VC-1 Codec.

Ein weiterer Aspekt der Erfindung ist die effiziente "Verschlagwortung" der Mediendaten durch Hinzufügen von Metadaten, die beispielsweise den Inhalt der Mediendaten, Ort, Datum, Zeit der Aufzeichnung, etc. beinhalten. Das vorgestellte System erlaubt es mittels der Metadaten Medieninhalte zu suchen und aufzufinden, bzw. diese zu indizieren. Die "Verschlagwortung" basiert auf dem niedrig auflösenden Medienstrom, so dass dieser Prozess auch unmittelbar mit dem Vorliegen der ersten Teile des niedrig auflösenden Medienstroms und/oder des hoch auflösenden Medienstroms beginnen kann. Basiert die "Verschlagwortung" auf dem Medienstrom mit niedriger Auflösung, muss nur eine geringe Datenmenge an einen entsprechenden Arbeitsplatz (Rechner) zur "Verschlagwortung" übermittelt werden. Dadurch lässt sich die zu übertragende Datenmenge signifikant reduzieren, da der hoch auflösende Medienstrom für diesen Vorgang nicht zur Verfügung stehen muss. Dadurch wird auch ermöglicht, dass die "Verschlagwortung" ortsunabhängig erfolgen kann, da sich der niedrig auflösenden Medienstrom auch unter Nutzung sehr geringer Bandbreiten an einen beliebigen Ort (d.h. einem an das Internet oder ein Netzwerk angeschlossenen Rechner) übertragen lassen.

Die "Verschlagwortung" der Mediendaten erfolgt dabei in einem Format, dass es ermöglicht, einzelne Metadaten entweder dem ganzen Medienstrom oder individuellen Sequenzen oder Bildern darin zuzuordnen. Das Format für die Metadaten ist dabei so ausgebildet, dass die einzelnen Metainformationen sowohl den entsprechenden Sequenzen oder Bildern im niedrig auflösenden Medienstrom als auch im hoch auflösenden Medienstrom zugeordnet werden, auch wenn die "Verschlagwortung" nur anhand des niedrig auflösenden und/oder hoch auflösenden Medienstroms erfolgt. Bereits bei der Erzeugung der beiden Medienströme wird sichergestellt, dass die jeweiligen Bilder oder Sequenzen in beiden Strömen mit einem gleichen Identifikationscode, wie z.B. einem Timecode, versehen werden. Entsprechend sind die Metadaten mit Identifikationscodes verknüpft, so dass sie entsprechenden Bildern oder Sequenzen zuordenbar sind.

Nicht zuletzt deshalb kann in einer beispielhaften Implementierung anhand des niedrig auflösenden und/oder hoch auflösenden Medienstroms und optional basierend auf den zugehörigen Metadaten auf einem Rechner ein Rohschnitt der Mediendaten erfolgen. Auch wenn die Metadaten für den Schnitt nicht zwingend notwendig sind, ist es für einen Bearbeiter vorteilhaft, einzelne Einsprungpunkte in die Medienströme oder Sequenzen darin nicht abstrakt anhand der Identifikationscodes zu definieren, sondern mit Hilfe einzelner Metadaten entsprechende Einsprungpunkte in die Medienströme oder Sequenzen darin für den Schnitt identifizieren zu können. In einer beispielhaften Implementierung können Schnittrechner und der Rechner für die Verschlagwortung ein und derselbe Rechner sein (oder anders ausgedrückt, kann die Schnitt-Software und die Logging-Software zur Verschlagwortung auf einem Rechner installiert sein, bzw. als eine oder mehere Komponenten einer Software ausgebildet sein). Auch ist es möglich, dass der Rechner als Transcodier-Vorrichtung fungiert, d.h. die bevorzugt hoch auflösenden Mediendaten empfängt und in die Medienströme mit hoher Auflösung und niedriger Auflösung umwandelt. Alternativ kann dies auch extern, z.B. mittels einer sogenannten Media-Streambox erfolgen. Die zwischen dem niedrig auflösenden und hoch auflösenden Medienstrom synchronisierte Verwendung von Identifikationscodes (und die Zuordenbarkeit der Metadaten zu beiden Strömen) ermöglicht, dass der Rohschnitt basierend auf dem niedrig auflösenden oder hoch auflösenden Medienstrom, bzw. die Schnitt-Informationen, auch für die Mediendaten des hoch auflösenden bzw. niedrig auflösenden Medienstroms anwendbar sind. Entsprechend ermöglicht der Rohschnitt basierend auf dem niedrig auflösenden Medienstrom eine Materialauswahl aus dem hoch auflösenden Medienstrom und anders herum. Somit können die für den Feinschnitt notwendigen hoch auflösenden Mediendaten aus dem hoch auflösenden Medienstrom basierend auf den Rohschnittdaten (d.h. entsprechenden Informationen, die die entsprechend benötigten Bilder und Bildsequenzen im hoch auflösenden Medienstrom zum Beispiel mittels der Identifikationscodes beschreiben), angefordert werden. Im Gegensatz zu einem herkömmlichen System, können so nur Teile der hoch auflösenden Mediendaten von ihrem jeweiligen Speicherort angefordert und übertragen werden, so dass eine Satellitenleitung überflüssig sein kann. Beispielsweise stellt dies für Nachrichten und die schnelle Live-Berichterstattung eine vorteilhafte Möglichkeit dar, Mediendaten in guter Qualität schnell und vor allem gesichtet an den jeweiligen Ort der Aussendung zu übertragen.

Metadaten werden für jede durch das System verarbeitete Mediendaten in einer Datenbank gespeichert und sind mit den entsprechenden niedrig auflösenden und hoch auflösenden Medienströmen verknüpft. Auch die niedrig auflösenden und hoch auflösenden Medienströme können entsprechend in Datenbanken gespeichert werden, um später wieder auf sie zugreifen zu können. Eine Verknüpfung der Metadaten und der niedrig auflösenden und hoch auflösenden Medienströme kann beispielsweise über eine entsprechende Kennungen (ID) erfolgen, die den Metadaten und den Medienströmen in den Datenbanken zugeordnet ist. Auch können alternativ die niedrig auflösenden und hoch auflösenden Medienströme und die Metadaten selbst Zusatzinformationen umfassen, die eine Verknüpfung der Medienströme mit den Metadaten und optional auch untereinander ermöglichen.

Dadurch wird es auch möglich, mittels der Metadaten verschiedene aufgezeichnete Mediendaten nach bestimmten Inhalten/Information zu durchsuchen, die entsprechenden niedrig auflösenden Medienströme in den verschiedenen Datenbanken/Speicherorten zu ermitteln, die den Suchkriterien entsprechen und diese dann für einen Vorschnitt, wie bereits beschrieben, anzufordern. So kann auch ein Vorschnitt eines Medienbeitrags, der auf mehreren verschiedenen Mediendaten basiert erzeugt werden, ohne dass dazu die gesamten hoch auflösenden Mediendaten, die für den Schnitt des gesamten Medienbeitrag notwendig sind, über ein Netzwerk übertragen werden müssen.

Die Erfindung bezieht sich auf ein Medien-System dass eine Transcodierungs-Vorrichtung umfasst, die vorzugsweise hoch auflösende Mediendaten empfängt und in einen Medienstrom mit niedriger Auflösung und einen Medienstrom mit hoher Auflösung umwandelt und mit einer identischen Medienstrom-Kennung versieht, wobei die einzelnen Bilder der Mediendaten in den beiden Medienströmen durch die Transcodierungs-Vorrichtung mit einem identischen Identifikationscodes versehen werden. Ferner umfasst das Medien-System eine Logging-Vorrichtung, die den Medienstrom mit niedriger Auflösung (und optional auch den Medienstrom mit hoher Auflösung) empfängt und dessen (bzw. deren) Mediendaten einem Benutzer zur Anzeige bringt, wobei die Logging-Vorrichtung ferner eingerichtet ist die Mediendaten als ganzes, einzelne Bildsequenzen oder Bilder davon mit Metadaten zu versehen. Die einzelnen Metadaten werden mit Hilfe der Identifikationscodes einzelnen Bildsequenzen oder Bildern des Medienstroms mit niedriger Auflösung bzw. des Medienstroms mit hoher Auflösung zugeordnet, und mit Hilfe der Medienstrom-Kennung mit den Mediendaten verknüpft.

In einer Ausführungsform umfasst das Medien-System ferner eine erste Schnittvorrichtung, die den Medienstrom mit niedriger Auflösung und die zugehörigen Metadaten empfängt und einem Benutzer das Erstellen einer Schnittliste für den Schnitt der Mediendaten des Medienstroms mit niedriger Auflösung unter Verwendung der Metadaten ermöglicht.

Das Medien-System kann ferner eine zweite Schnittvorrichtung umfassen, die mit Hilfe der Schnittliste für den Schnitt der Mediendaten die für den Schnitt der Mediendaten notwendigen Teile des Medienstroms mit hoher Auflösung über ein Netzwerk erhält, und einem Benutzer den Schnitt der Mediendaten basierend auf den erhaltenen Teilen des Medienstroms mit hoher Auflösung ermöglicht.

In einer beispielhaften Ausführungsform fügt die erste Schnittvorrichtung in die Schnittliste die Medienstrom-Kennung des Medienstroms mit niedriger Auflösung ein, um dem der zweiten Schnittvorrichtung zu ermöglichen, den korrespondierenden Medienstrom mit hoher Auflösung zu empfangen. Ferner kann die durch die erste Schnittvorrichtung erzeugte Schnittliste die Teile des Medienstroms mit Hilfe von Identifikationscodes der Bilder identifiziert.

Gemäß einer weiteren Ausführungsform der Erfindung erlaubt die erste Schnittvorrichtung einen Schnitt basierend auf Schlagworten und Kennzeichnungen in den Metadaten und ist in der Lage, diese für die Erzeugung der Schnittliste in Identifikationscodes der Bilder umzusetzen, um Teile des Medienstroms zu identifizieren.

Der Medienstrom mit niedriger Auflösung kann vorzugsweise eine niedrige Bitrate aufweisen, vorzugsweise im Bereich 0,5 MBit/s bis 2 MBit/s. Der Medienstrom mit hoher Auflösung kann eine hohe Bitrate aufweisen, vorzugsweise 50 MBit/s oder höher.

Das Medien-System kann gemäß einer weiteren Ausführungsform der Erfindung ferner eine oder mehrere Metadaten-Datenbanken umfassen, die die Metadaten über ein Netwerk empfangen und speichern und/oder eine oder mehrere Medien-Datenbanken, die die beiden durch die Transcodierungs-Vorrichtung erzeugten Medienströme über ein Netzwerk senden, empfangen und speichern.

Ferner bezieht sich die Erfindung auf ein Verfahren zur Bearbeitung von Mediendaten. Gemäß dem Verfahren empfängt eine Transcodierungs-Vorrichtung vorzugsweise hoch auflösende Mediendaten und wandelt diese in einen Medienstrom mit niedriger Auflösung und einen Medienstrom mit hoher Auflösung um. Ferner versieht die Transcodierungsvorrichtung die beiden Medienströme mit einer identischen Medienstrom-Kennung. Das Verfahren beinhaltet ferner das Hinzufügen eines identischen Identifikationscodes in die einzelnen einander entsprechenden Bilder der Mediendaten in die beiden Medienströme durch die Transcodierungs-Vorrichtung.

Der Medienstrom mit niedriger Auflösung, optional auch der Medienstrom mit hoher Auflösung, und dessen bzw. deren Mediendaten werden weiter in einer Logging-Vorrichtung empfangen, die die Mediendaten einem Benutzer zur Anzeige bringt. Nach dem Verfahren werden ferner Metadaten zu dem Medienstrom als ganzes, einzelner Bildsequenzen oder Bilder davon durch die Logging-Vorrichtung hinzugefügt, wobei die einzelnen Metadaten mit Hilfe des Identifikationscodes einzelnen Bildsequenzen oder Bildern des empfangenen Medienstroms bzw. der empfangenen Medienströme zugeordnet werden, und mit Hilfe der Medienstrom-Kennung mit den Mediendaten verknüpft werden.

In einer Ausführungsform umfasst das Verfahren ferner das Empfangen des Medienstroms mit niedriger Auflösung und der zugehörigen Metadaten in einer ersten Schnittvorrichtung, und das Erstellen einer Schnittliste für den Schnitt der Mediendaten des Medienstroms mit niedriger Auflösung unter Verwendung der Metadaten durch die erste Schnittvorrichtung.

In einer weiteren Ausführungsform umfasst das Verfahren ferner das Empfangen der für den Schnitt der Mediendaten notwendigen Teile des Medienstroms mit hoher Auflösung über ein Netzwerk durch eine zweite Schnittvorrichtung mit Hilfe der Schnittliste. Die zweite Schnittvorrichtung ermöglicht einem Benutzer den Schnitt der Mediendaten basierend auf den erhaltenen Teilen des Medienstroms mit hoher Auflösung.

In einer weiteren Ausführungsform umfasst das Verfahren ferner das Verkoppeln von mehreren Streamboxen in einem Netzwerk, so dass gleichzeitig, für mehrere Mediendatenquellen für die jeweiligen hoch auflösenden oder niedrig auflösenden Medienströme eine gemeinsamen "Verschlagwortung" erfolgen kann. Die einzelnen Medienströme aus den unterschiedlichen Mediendatenquellen können in so genannte Projekte zusammengefasst werden und mit der selben Medienstrom-Kennung versehen werden. Entsprechend ist es möglich für die einzelnen Medienquellen oder gleichzeitig für mehrere der Medienquellen gleichzeitig eine entsprechende "Verschlagwortung" vorzunehmen.

Zur "Verschlagwortung" kann in der Logging-Software entsprechend angepasst werden (z.B. Singlemodus und Multimodus), um die Bearbeitung von einzelnen Mediendatenquellen oder einem Verbund von mehreren Mediendatenquellen zu ermöglichen. Beispielsweise ist es so auch möglich eine Vorselektion ("live" -Vorschnitt) des gewünschten Bild- und Tonmateriales basierend auf dem niedrig auflösenden Medienströmen von mehreren Mediendatenquellen zu realisieren und als Schnittliste zur Verfügung zu stellen.

In einer weitern Ausführungsform umfasst das Verfahren ferner die Verwaltung aller notwendigen Komponenten des Medien-Systems und erlaubt dem Benutzer über eine Schnittstelle die Kontrolle des Medien-Systems. zur Verwaltung gehören unter anderem die Verwaltung der direkten und indirekten Speicherzugriffe, ein Versionsmanagement zur Kontrolle unterschiedlicher Stände der Mediendaten, ein Checkin- /Checkoutsystem für die kontrollierte Bereitstellung der Mediendaten und Metadaten, das Rechtemanagement (DRM) für Bildrechte und administrative Rechte, Verrechnungswesen von Ein- und Verkäufen, Zeit- und Stundenmanagement, sowie Langzeitarchivierung.

Ebenso umfasst es in einer weiteren Ausführungsform die Distribution, der mittels des Mediensystems erstellten Medieninhalte. Die erzeugten Medienströme oder daraus geschnittene Beiträge/Programme in hoher oder niedriger Auflösung können beispielsweise über FTP, Internet, Extranet, Intranet und E-Business-Portale an Mobile Geräte wie Mobiltelefone, Smartphones und Tablet PC, Apps aller Betriebssysteme, Ausspielungen auf Tapes, Datenträger wie CD, DVD oder blu-ray. Digitales Fernsehen, Multimedia-Dienste wie livestream, IP - TV und die Versorgung von Social Networks (facebook, twitter, youtube, ...) runden alle Möglichkeiten ab.

Ein weiterer Aspekt der Erfindung betrifft die Implementierung von einzelnen Funktionen des Mediensystems in Software. Entsprechend betrifft die Erfindung auch computer-lesbare Medien, die Befehle speichern, die - wenn sie von einem Prozessor eines Rechners ausgeführt werden - den Rechner veranlassen die entsprechenden Funktionen zu realisieren. Beispielsweise werden in einer Ausführungsform Befehle einer Software auf einem computer-lesbaren Medium gespeichert, die - bei Ausführung der Befehle durch den Rechner - dem Benutzer ermöglichen, Medienströme mit Schlagworten und Kommentaren zu versehen (Verschlagwortung). Eine weitere Ausführungsform betrifft eine Software, die es dem Benutzer ermöglichen Medien-Inhalte in den Mediendatenbank(en), Metadaten-Bank(en), etc. des Medien-Systems aufzufinden und aus ausgewählten Medien-Inhalten ein Programm oder einen Beitrag zu schneiden. Ferner betrifft eine weitere Ausführungsform betrifft eine Software, die eine Schnittstelle zu den Mediendatenbank(en), Metadaten-Bank(en), etc. des Medien-Systems bereitstellt und entsprechend die Suchanfragen und Anfragen nach Medien-Inhalten bearbeitet.

### BESCHREIBUNG DER FIGUREN

Nachfolgend wird die Erfindung anhand von Ausführungsbeispielen unter Bezug auf die Figuren näher beschrieben. Einander entsprechende Elemente und Details in den Figuren sind mit den gleichen Bezugszeichen versehen.
- **Fig. 1**: zeigt ein herkömmliches Medien-System, in dem zunächst ein Programm als hoch auflösenden Mediendatei gespeichert wird, die anschließend in eine niedrig auflösenden Mediendatei transcodiert wird,
- **Fig. 2**: zeigt eine zeitliche Gegenüberstellung des Systems nach Fig. 1 und einem MedienSystem der Erfindung, das mit Medienströmen arbeitet, und
- **Fig. 3**: zeigt ein Medien-System gemäß einer Ausführungsform der Erfindung.

### DETAILIERTE BESCHREIBUNG DER ERFINDUNG

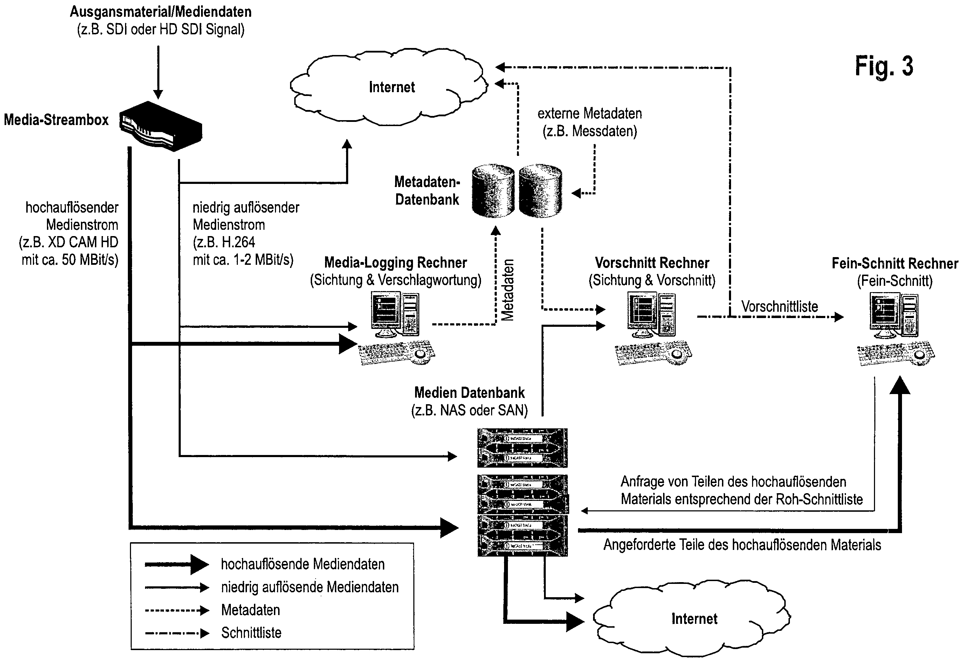

Fig. 3 zeigt ein Medien-System gemäß einer Ausführungsform der Erfindung. Wie bereits erwähnt ist es einer der Aspekte der Erfindung, aus aufgezeichneten Mediendaten, die beispielsweise als digitales hoch auflösendes Videosignal, vorliegen, mit einem hoch auflösenden Codec einen hoch auflösende Medienstrom (HiRes Stream) erzeugt und gleichzeitig aus den gleichen aufgezeichneten Mediendaten einen niedrig auflösenden Medienstrom (LoRes Stream) mittels eines niedrig auflösenden Codec erzeugt, auf die dann über das Internet oder ein Netzwerk unmittelbar zugegriffen werden kann, wie dies in Fig. 2 dargestellt ist. Damit ist es möglich, bereits nach kurzer Zeit, nachdem das Ausgangsmaterial vorliegt, einen niedrig auflösenden Medienstrom auch im Internet über schmalbandige Netzwerke zu übertragen.

In Fig. 3 wird das Ausgangsmaterial einer Media-Streambox zugeführt, die zum Beispiel mit Hilfe eines speziell auf die Transcodierung von Mediendaten ausgelegtes Rechnersystem realisiert werden kann. Die Media-Steambox transcodiert gleichzeitig die aufgezeichneten Mediendaten in den hoch auflösenden Medienstrom (HiRes Stream) und den niedrig auflösenden Medienstrom (LoRes Stream). Dabei versieht die Media-Steambox die einander entsprechenden Bilder in den Medienströmen mit gleichen Identifikationscodes, z.B. identischen Timecodes, so dass mittels einer Kennung identische Bilder in beiden Medienströmen identifizierbar sind. Die Media-Streambox ist ferner an ein Netwerk angeschlossen, über das der hoch auflösende Medienstrom (HiRes Stream) und der niedrig auflösenden Medienstrom (LoRes Stream) an eine Medien-Datenbank und optional an einen oder mehrere Media-Logging Rechner übertragen werden kann. Ferner versieht die Media-Steambox die beiden Medienströme mit einer eindeutigen Medienstrom-Kennung (z.B. eine generierter Unique Identifier - UID), mittels derer zueinander gehörende Medienströme gleichen Inhalts in der Mediendatenbank auffinden lassen.

Um die über das Internet zu übertragenden Datenmengen zu reduzieren, ist es vorteilhaft, wenn die Mediendatenbank zur Speicherung zumindest des hoch auflösenden Medienstroms sich innerhalb des (drahtgebundenen oder optischen) Netzwerks befindet, in dem sich auch die Media-Streambox befindet. Der niedrig auflösende Medienstrom kann in der gleichen Mediendatenbank/Speicherort oder einer anderen Mediendatenbank/Speicherort abgelegt werden.

In einem Ausführungsbeispiel ist die Media-Streambox als PC System ausgeführt, das mit einem bootbaren Betriebssystem (von Festplatte, Chip oder Netzwerk) betrieben wird. Das PC System kann mit einer Grafikkarte, Monitor, Maus und Tastatur ausgestattet sein. Zusätzlich ist eine spezielle Grafikkarte installiert, die das Verarbeiten von SD und HD SDI Videosignalen ermöglicht. Die zur Transcodierung und Konfiguration erforderliche Software ist ebenfalls auf einem Datenträger installiert und kann optional durch einen Dongle kopiergeschützt sein. Das eingespeiste Ausgangsmaterial wird, in mit dieser Software lokal, oder über das Netzwerk in mehrere Dateien transcodiert. Die Media Streambox kann weiter gängige Schnittstellen, wie USB, SATA, Firewire usw. umfassen und an ein Netzwerk/das Internet angeschlossen sein. Außerdem ist es möglich beliebig viele Streamboxen parallel im Netzwerk zu betreiben. Alle im Netzwerk befindlichen Streamboxen, werden mittels einer Software synchronisiert gehalten, so dass die zeitlich veränderlichen Identifikationscodes (z.B. Zeitstempel) untereinander einheitlich "getaktet" sind.

Die aufgezeichneten Mediendaten können dabei z.B. mit einem SD oder HD SDI Codec kodiert sein und einem Übertragungswagen, einer (HD) Kamera, einem Satelliten-Feed, auf einem optischen Speichermedium (z.B. Professional Disc, Blu-ray Disc, etc.), Band, etc. stammen. Vorteilhafterweise aber nicht zwingend liegen die aufgezeichneten Mediendaten als Ausgangsmaterial der Verarbeitung in einem hoch auflösenden Format mit einer Bitrate von ca. 50 MBit/s oder höher vor. Die Bildauflösung des Ausgangsmaterials kann beispielsweise im 720p, 1080i, 1080p, oder mit noch höherer Bildauflösung vorliegen. Dies ist aber ebenfalls nicht zwingend erforderlich.

Als Codec für den hoch auflösenden Medienstrom kann beispielsweise ein Streaming-fähiges Format, wie XD CAM HD, verwendet werden, als Codec für den niedrig auslösenden Medienstrom beispielsweise ein H.264 Codec, MPEG2 Codec oder ein VC-1 Codec.

Die Datenrate des hoch auflösenden Medienstrom kann beispielsweise im Bereich von ca. 50 MBit/s und höher liegen, jedoch sind auch niedrigere Datentaten im zweistelligen MBit/s Bereich möglich. Vorteilhafterweise sollte die Bildauflösung des hoch auflösenden Datenstroms beispielsweise 720p, 1080i oder 1080p betragen oder höher. Jedoch ist auch eine niedrigere Auflösung denkbar.

Der niedrig auslösende Medienstrom sollte eine Datenrate haben, so dass er problemlos auch über Netzwerke mit niedriger Bandbreit (z.B. Mobilfunknetze) übertragbar ist und liegt entsprechend z.B. im Bereich 1-2 MBit/s. In einer Ausführungsform der Erfindung entspricht die Bild-Auflösung des niedrig auslösenden Medienstroms der des hoch auflösenden Medienstroms. Optional ist es möglich, dass der niedrig auflösende Datenstrom der Öffentlichkeit unmittelbar über das Internet, z.B. über YouTube oder ähnlichen Portalen zur Verfügung gestellt wird.

Ein weiterer Aspekt der Erfindung ist die effiziente "Verschlagwortung" der Mediendaten durch Hinzufügen von Metadaten, die beispielsweise den Inhalt der Mediendaten, Ort, Datum, Zeit der Aufzeichnung, etc. beinhalten. Das vorgestellte System erlaubt es mittels der Metadaten Medieninhalte zu suchen und aufzufinden, bzw. diese zu indizieren. Die "Verschlagwortung" kann auf dem niedrig auflösenden Medienstrom basieren. Es ist aber auch möglich, dass auch der hoch auflösende Medienstrom vorliegt und somit beide Medienströme zusammen mit Metadaten versehen werden können. Dieser Prozess kann unmittelbar mit dem Vorliegen der ersten Teile des niedrig auflösenden Medienstroms beginnen.

Die "Verschlagwortung" basierend auf dem niedrig auflösenden Medienstrom kann besonders vorteilhaft sein, da dadurch nur eine geringe Datenmenge an einen entsprechenden Arbeitsplatz (Rechner) zur "Verschlagwortung" übermittelt werden muss, und sich die zu übertragende Datenmenge so signifikant reduzieren lassen. Da der hoch auflösende Medienstrom für diesen Vorgang nicht zur Verfügung stehen muss, kann die "Verschlagwortung" entsprechend ortsunabhängig erfolgen, da sich der niedrig auflösenden Medienstrom auch unter Nutzung sehr geringer Bandbreiten an einen beliebigen Ort (d.h. einem an das Internet oder ein Netzwerk angeschlossenen Rechner) übertragen lässt.

In dem Ausführungsbeispiel der Fig. 3 erfolgt die Verschlagwortung mittels eines Media-Logging-Rechners, der das redaktionelle Erkennen, Erfassen und Bewerten von Bildsequenzen im Live-Betrieb ermöglicht, in dem es eine entsprechende Benutzeroberfläche zur Verfügung stellt. Die "Verschlagwortung" und Transcodierung können optional auch auf einem Rechner implementiert werden. Der niedrig auflösende Medienstrom, bzw. sofern der hoch auflösende Medienstrom vorliegt alternativ auch der hoch auflösende Medienstrom, wird auf dem Media-Logging-Rechner dem Benutzer visuell dargestellt. In einer beispielhaften Ausführungsform kann der Benutzer zwischen der Darstellung des niedrig auflösenden Medienstroms und des hoch auflösenden Medienstroms mittels der Benutzeroberfläche wählen und/oder zwischen ihnen wechseln. Auch ist es möglich, dass die Benutzeroberfläche dem Benutzer erlaubt, sich mittels einer Shuttle-Funktion im jeweilig dargestellten Medienstrom zu bewegen.

Die Darstellung und/oder "Verschlagwortung" kann entweder parallel zur fortlaufenden Erzeugung des niedrig auflösenden Medienstroms bzw. hoch auflösendem Medienstroms erfolgen (sozusagen "Live") oder alternativ kann der Benutzer auch einen zu verschlagwortenden Medieninhalt auswählen worauf hin der zugehörige niedrig auflösenden Medienstrom und/oder hoch auflösende Medienstrom von der entsprechenden Mediendatenbank/Speicherort über das Netwerk angefordert und an den Media-Logging-Rechner übertragen (z.B. gestreamt) wird. Im Prozess der Verschlagwortung wird das sich gerade in Verarbeitung befindliche Bild- und Tonmaterial mit Metadaten angereichert, z.B. indem es inhaltlich visuell durch den Benutzer analysiert und nach redaktionell vorgegebenen Kriterien indiziert/verschlagwortet wird.

Die "Verschlagwortung" der Mediendaten erfolgt dabei in einem Format, das es ermöglicht, einzelne Metadaten entweder dem ganzen Medienstrom oder individuellen Sequenzen oder Bildern darin zuzuordnen. Alle Metadaten für einen Medienstrom sind mit dessen Medienstrom-Kennungen verknüpft, um die Metadaten dem entsprechenden Mediendaten in der/den Medien-Datenbank(en) zuordnen zu können. Das Format für die Metadaten ist dabei so ausgebildet, dass die einzelnen Metainformationen Informationen enthalten, um sie sowohl den entsprechenden Sequenzen oder Bildern im niedrig auflösenden Medienstrom als auch im hoch auflösenden Medienstrom zuzuordnen, auch wenn die "Verschlagwortung" nur anhand des niedrig auflösenden Medienstroms oder des hoch auflösenden Medienstroms erfolgt.

Bereits bei der Erzeugung der beiden Medienströme wird sichergestellt, dass die jeweiligen Bilder oder Sequenzen in beiden Strömen mit einem gleichen Identifikationscode, wie z.B. einem Timecode, versehen werden. Entsprechend sind die Metadaten mit Identifikationscodes verknüpft, so dass sie entsprechenden Bildern oder Sequenzen zuordenbar sind. Beispielsweise können die jeweiligen Metadaten zur Identifikation und Zuordnung der einzelnen Metadaten zu einzelnen Bildern oder Bildsequenzen innerhalb des Medienstroms einen Identifikationscode (z.B. Timecode) des entsprechenden Bilds oder Informationen zu den Identifikationscodes für das erste und letzte Bild einer Sequenz besitzen. Ein Timecode kann beispielsweise im Format hh:mm:ss:ff, wobei hh die Stunden, mm die Minuten, ss die Sekunden und ff die Anzahl der Einzelbilder relativ zum Beginn des Medienstroms angeben.

Eine Sequenz von Bildern kann dabei zum Beispiel in den Metadaten mit Hilfe der Identifikationscodes des ersten und letzten Bilds der Sequenz oder durch die den Identifikation des ersten Bilds der Sequenz und die Länge der Sequenz (z.B. als Anzahl der Bilder, zeitliche Dauer in Millisekunden, oder Sekunden, eine Kombination der vorgenannten Parameter, etc.) angegeben werden.

Auch ist es möglich den Logging-Rechner an ein System zur Erfassung von Messdaten zu koppeln, dass mit einem Identifikationscode (z.B. Timecode) versehene Messdaten erhebt. Die Messdaten können beispielsweise periodisch ermittelt werden. Somit lassen sich in den Metadaten auch Messwerte einzelnen Bildern oder Bildsequenzen in den Mediendaten mittels des Identifikationscode automatisch zuordnen und mit in der Meta-Datenbank speichern. Beispielsweise werden von den Rennstallbetreibern bei Autorennen bereits mit einem Timecode versehende Fahrzeug-bezogene Messdaten, wie Position (z.B. GPS Daten), Gang, Gaspedalstellung, Bremspedalstellung, Lenkradeinschlag, etc. periodisch, teilweise im Sekundentakt oder Vorgangsabhängig erfasst. Diese Messdaten können dem Logging-Rechner und/oder der Metadaten-Datenbank zugeführt werden und als Teil der Metadaten mittels der des Timecode mit den entsprechenden Bildern der Mediendaten verknüpft gespeichert werden.

Die erstellten Metadaten enthalten somit Informationen, die über den Inhalt des verarbeiteten Mediendaten bekannt sind, aber nicht direkt aus dessen Inhalt herauszulesen sind, wie zum Beispiel Dateiname, Erstellungs- und Änderungsdatum, Größe, Medienstrom-Kennung, Messdaten, etc. Metadaten können etwa Angaben über Thema und Inhalt der Mediendaten enthalten, die als recherchierbare Schlüsselbegriffe die inhaltliche Zuordnung und das Wiederfinden des Materiales ermöglichen. Merkmale der Metadatenerstellung sind unter anderem:
- Vorsehen beliebig vieler Metadaten-Kategorien und Stichwörter für einen Medienstrom
- Mehrere Ebenen für Kategorien und Stichwörter
- Mehrsprachige Verwaltung von Stichwörtern und Kategorien
- Mehrsprachige Verschlagwortung und Bildbeschreibungen
- Keine Limitierungen in der Anzahl an möglichen Sprachen
- Berechtigungssysteme zur Zugriffsabsicherung und zum Schutz von Informationen.
- etc.

Die Metadaten werden in einer Metadaten-Datenbank gespeichert, die beispielsweise als XML Datenbank ausgeführt sein kann. Die Metadaten-Datenbank ist dabei über ein Netzwerk mit dem Media-Logging-Rechner verbunden, so dass der Media-Logging-Rechner nach erfolgter Verschlagwortung die Metadaten in der Metadaten-Datenbank speichern kann. Ferner kann über das Netzwerk auf die Metadaten in der Metadaten-Datenbank zugegriffen werden. Die Metadaten können in einer XML Datenbank hierarchisch hinterlegt werden. Dadurch ergeben sich vielfältige Anwendungsmöglichkeiten, da die Metainformationen zu den Mediendaten plattformunabhängig zwischen den unterschiedlichsten Systemen ausgetauscht werden können. XML bietet die Möglichkeit, die Medieninhalte bis auf die kleinsten Inhaltskomponenten aufzubrechen und ihren logischen Zusammenhang anhand einer Baumstruktur zu hinterlegen und gegebenenfalls mit Metainformationen zu versehen.

Die Strukturen der XML Dateien wird dabei durch ein XML Schema definiert, das in einem Directory abgelegt wird. Zur Kommunikation mit mehreren verschiedenen Directory Services wird XML, bzw. das daraus abgeleitete DSML (Directory Service Markup Language), zur neutralen Beschreibung der hinterlegten Daten benutzt, womit man relativ unabhängig von den vorhandenen Datenmodellen arbeiten kann. Eine Konsolidierung dessen, kann mit anderen Portalen beschreiben werden. In diesen Portalen werden benutzerspezifische Informationen anhand der Organisationsstruktur und weiteren Ordnungskriterien aufbereitet.

Das Medien-System bietet die Möglichkeit nahezu mit jedem Speichersystem einen Datenaustausch zu betreiben oder für ein solches die Logging- und Distributionstätigkeiten zu übernehmen. Daten werden erstellt, gespeichert und können mit anderen Speichern synchronisiert werden. Die Mediendaten bleiben dabei unverändert, da sie bereits im richtigen Codec aufgezeichnet werden und die Metadaten mittels der Medienstrom-Kennung problemlos zugeordnet werden können.

Ferner können die Metadaten für einen oder mehrer Medienströme in sogenannten Log-Dateien in der einen oder mehreren Metadatenbanken gespeichert werden. Die einzelnen Log-Dateien können einzelnen Medienströmen, mehreren Medienströmen oder einem ganzen Projekt durch den Benutzer mittels der Logging-Vorrichtung zugewiesen werden und optional später bearbeitet/verändert werden.

In Fig. 3 ist der Media-Logging-Rechner als einzelnes Rechnersystem dargestellt. Selbstverständlich können beliebig viele Media-Logging-Rechner vorgesehen werden, die auch nicht notwendigerweise am gleichen Ort (d.h. in einem gleichen drahtgebundenes oder optisches Netzwerk) installiert sein müssen. Die Media-Logging-Rechner können somit unabhängig vom Speicherort der hoch auflösenden Medienströme zur Verfügung gestellt werden, da sie zur Verschlagwortung lediglich die niedrig auflösenden Medienströme benötigen. Entsprechend ist es auch möglich, dass die Media-Logging-Rechner - sozusagen Standort-unabhängig - über drahtlose Netze, wie z.B. ein Mobilfunknetz, WLAN oder WiMAX Netwerk angebunden sind. Beispielsweise können die Media-Logging-Rechner auch als Apps auf Smartphones, auf Tablet PC, herkömmlichen Heimrechnern, etc. realisiert sein. Beispielsweise kann eine Client-Software für die Verschlagwortung und/oder einen Schnitt basierend auf dem niedrig auflösenden Bildmaterial in einem Standard Browser (z.B. Internet Explorer, Mozilla, Google Chrome, Apple Safari usw.) realisiert werden. Diese kann beispielsweise auch eine Zugangssoftware für den Login in einem Zugriffskontrollsystem umfassen (vgl. Infomationsverwaltungsdienst/DML Service des Medien-Zugriffs-Servers). Der Login kann über ein LAN, Intranet, Internet usw. erfolgen. Die Anmeldedaten können kundenspezifisch sein.

Wie bereits erwähnt, können die hoch auflösenden und die niedrig auflösenden Medienströme in einer oder mehren Medien-Datenbanken gespeichert werden. Die Medien-Datenbank(en) sind an ein Netzwerk angeschlossen, so dass über einen Rechner auf sie zugegriffen werden kann. Die Medien-Datenbank(en) können als Speicher-System, das auf NAS (Network Attached Storage), SAN (Storage Area Network) oder SAS (Serial Attached SCSI) Technik basiert ausgeführt sein.

Der Zugriff auf der Medien-Datenbank(en) (in Fig. 3 nicht gezeigt) und/oder die Metadaten-Datenbank(en) kann über einen oder mehrere Medien-Zugriffs-Server (in Fig. 3 nicht gezeigt) erfolgen. In einer beispielhaften Ausführungsform wird dazu ein Infomationsverwaltungs-Dienst (z.B. ein DML Service) eingesetzt, um den der Zugriff auf alle Informationen in den Datenbanken zu realisieren und kontrollieren. Der DMLS (Digital Media Library Service) kann dabei als Software realisiert werden, welche sich nach außen als ein Standard File System (UFS oder NFS) und damit völlig transparent darstellt.

Der DML Service ist für den Empfang und die Speicherung der an den Logging-Rechnern erstellten Metadaten und der die hoch auflösenden und die niedrig auflösenden Medienströme verantwortlich. Es verwaltet die Speicherorte in der dynamischen Ablage, dem eigentlichen Speicher und im Langzeitarchiv. Der Speicherort der die hoch auflösenden und die niedrig auflösenden Medienströme (und ihrer Metadaten) wird dabei durch die Eigenschaften und Klassenzugehörigkeit (in den Metadaten) der zu speichernden Information bestimmt. Ferner steuert der DML Service den Zugriff auf die Informationen in den Datenbanken. Zum Beispiel ermöglicht der DML Service die Ausführung der Suchanfragen in den Metadaten und kann so Mediendaten/Inhalte wieder auffinden und bereitstellen.

Alle durch das System verarbeiteten Mediendaten können in einer Datenbank gespeichert werden und sind mit dem entsprechenden niedrig auflösenden und hoch auflösenden Medienstrom verknüpft. Die niedrig auflösenden und hoch auflösenden Medienströme sind wie beschrieben in entsprechenden Datenbanken/Speicherorten gespeichert, um später wieder - z.B. über einen Medien-Zugriffs-Server - auf sie zugreifen zu können. Dadurch wird es auch möglich, mittels der Metadaten verschiedene aufgezeichnete Mediendaten nach bestimmten Inhalten/Informationen zu durchsuchen, die entsprechenden niedrig auflösenden Medienströme in den Datenbanken/Speicherorten zu ermitteln, die den Suchkriterien entsprechen und diese dann für einen "Vorschnitt" anzufordern. So kann auch ein Vorschnitt eines Medienbeitrags, der auf mehreren verschiedenen Mediendaten basiert erzeugt werden, ohne dass dazu die gesamten hoch auflösenden Mediendaten, die für den Schnitt des gesamten Medienbeitrag notwendig sind, über ein Netzwerk übertragen werden müssen.

In Fig. 3 ist in diesem Kontext ein Vorschnitt-Rechner, der eine Sichtung des vorhandenen Medienmaterials und den Schnitt eines Beitrags/Programms erlaubt. Der Vorschnitt Rechner führt eine Schnitt-Software aus, die es unter anderem dem Benutzer erlaubt, die Datenbanken nach Inhalten zu durchsuchen. Wie bereits beschrieben, kann der Zugriff (auch die Suche nach Inhalten) über den Medien-Zugriffs-Server (bzw. dessen Infomationsverwaltungs-Dienst (z.B. ein DML Service)) realisiert werden. Die Schnitt-Software ermöglicht es dem Benutzer, Suchanfragen zu formulieren. Die eingegeben Suchbegriffe werden dann durch den Medien-Zugriffs-Server in den in der Metadaten-Datenbank(en) abgelegten Metadaten gesucht und entsprechende Treffer über ein Netzwerk zurück an den Vorschnitt-Rechner übermittelt.

Dort werden sie zur Anzeige gebracht, um den Benutzer die weitere Auswahl von passenden Inhalten für das gewünschte zu schneidende Programm (Beitrag) zu ermöglichen. Der Vorschnittrechner fordert bei entsprechender Eingabe durch den Benutzer, einen oder mehrere niedrig auflösende Medienströme und optional weiter zugehörige Metadaten über den Medien-Zugriffs-Server von der Datenbank(en) an, und bringt den oder die gewünschten niedrig auflösende und/oder hoch auflösenden Medienströme dem Benutzer mittels der Schnitt-Software zur Anzeige. Die Medienströme werden anhand ihrer Medienstrom-Kennung identifiziert, die in den zugeordneten Metadaten der Trefferliste enthalten sind.

Der Benutzer kann nun basierend auf dem niedrig auflösenden und/oder hoch auflösenden Material und den zugehörigen Metadaten eine Vorschnittliste erstellen, die die für das zu schneidende Programm (Beitrag) benötigten Inhalte identifiziert. Dabei können beim Schnitt auch die Metadaten verwendet werden, die vom Vorschnitt-Rechner in entsprechende gewünschte Medienströme und die entsprechenden Bilder oder Bildsequenzen daraus identifizierende Informationen in die Schnittliste umsetzt.

So kann zum Beispiel der Benutzer mittels der Schnitt-Software, mit der das Audio- und Videomaterial über Netzwerk durchsucht, eingelesen und bearbeitet werden kann, und entsprechender Eingabe in eine Suchmaske den Vorschnitt-Rechner veranlassen, alle Medienströme zu finden, in denen Unfälle oder Überholmanöver eines bestimmten Formel 1-Fahrers vorkommen. Die so erhaltenen Metadaten identifizieren entsprechend die einzelnen Medienströme mittels der Medienstrom-Kennung und geben ferner den Einstiegspunkt (oder die entsprechende Bildsequenz) in den einzelnen Medienströmen mittels der Identifikationscodes in den Metadaten an. Entsprechend kann der Benutzer so schnell nach gewünschten Inhalten suchen und diese dann direkt, oder nach weiterer Sichtung selektiv in eine Schnittliste übernehmen. In der Schnittliste werden dann die gewünschten Sequenzen oder Bilder der Medienströme mittels Medienstrom-Kennung und Identifikationscodes angegeben.

Die fertige Schnittliste des Schnitts kann optional ebenfalls in einer Datenbank abgelegt werden, um zum Beispiel mittels eines anderen Schnittsystems (z.B. für den Feinschnitt) auf sie zuzugreifen. Um die Schnittliste wieder auffindbar zu machen, kann diese ebenfalls mit entsprechenden Metadaten versehen werden.

Anhand der Schnittliste dieses Vorschnitts kann dann ein weiter "Fein-Schnitt" basierend auf dem hoch auflösenden Material erfolgen. In Fig. 3 findet der Fein-Schnitt - exemplarisch - auf einem weiteren Fein-Schnitt Rechner statt. Es ist jedoch auch möglich, den Vor- bzw. Feinschnitt auch mittels einem Rechner (und einer Schnitt-Software) durchzuführen. In diesem Falle wäre es auch möglich anhand der Metadaten in der ersten Trefferliste gleich Teile aus dem oder den hoch auflösenden Medienströmen aus den Datenbanken/Speicherorten für den weiteren Schnitt anzufordern. Jedoch wird eine weitere Sichtung und genauere Auswahl des Materials anhand des niedrig auflösenden Materials in der Regel bevorzugt werden, insbesondere wenn der Schnitt-Rechner nicht mit einer Breitbandanbindung mit dem Netz/Internet verbunden ist.

Der Fein-Schnitt Rechner erhält die Schnittliste entweder von einem Vorschnitt-Rechner oder aus einer Datenbank und fordert basierend auf deren Inhalt die für den Schnitt benötigten Teile des oder der hoch auflösenden Medienströme über das Netzwerk aus der oder den Mediendatenbanken/Speicherorten an. Dieser Zugriff kann wieder über den Medien-Zugriffs-Server erfolgen. Basierend auf dem hoch auflösenden Bild- und Tonmaterial kann nun der Benutzer das gewünschte Programm (Beitrag) schneiden und optional mit entsprechenden Metadaten versehen. Das fertig geschnittene Programm (Beitrag) kann dann auf herkömmliche Weise ausgesendet, in einer Medien-Datenbank/Speicherort etc. gespeichert werden. In einer Ausführungsform der Erfindung erfolgt der Fein-Schnitt dann sowohl gleichzeitig auf dem niedrig auflösenden und dem hoch auflösenden Medienströmen, so dass ein fertig geschnittenes Programm (Beitrag) sowohl in niedrig auflösender Qualität (z.B. zur Distribution über das Internet) und in hoch auflösender Qualität (z.B. zur Distribution via digitalen Rundfunk, Aufzeichnung auf Speichermedien, etc.) zur Verfügung stehen.

Ein Schnitt-Rechner (für den Vor- und/oder Fein-Schnitt) kann wiederum, wie der Media-Logging-Rechner, in verschiedenster Form ausgeführt sein. In einer Ausführungsform sind der Media-Logging-Rechner und der Schnitt-Rechner als ein Rechner ausgeführt. Selbstverständlich können wiederum beliebig viele Schnitt-Rechner vorgesehen werden, die auch nicht notwendigerweise am gleichen Ort (d.h. in einem gleichen drahtgebundenes oder optisches Netzwerk) installiert sein müssen. Die Vorschnitt-Rechner können somit unabhängig vom Speicherort der hoch auflösenden Medienströme zur Verfügung gestellt werden, da sie für den Schnitt lediglich die niedrig auflösenden Medienströme benötigen und für den Feinschnitt - sofern er auf dem selben Rechner erfolgt - nur entsprechend ausgewählte Teile des hoch auflösenden Materials aus den Datenbanken abgerufen werden muss. Entsprechend ist es auch möglich, dass die Schnitt-Rechner über drahtlose Netze, wie z.B. ein Mobilfunknetz, WLAN oder WiMAX Netwerk angebunden sind. Beispielsweise können die Schnitt-Rechner auch als Apps auf Smartphones, auf Tablet PC, herkömmlichen Heimrechnern, etc. realisiert sein.

Das beschriebene Medien-System erlaubt es somit die unterschiedlichen Medien-Inhalte kontrolliert und nutzungsorientiert auf unterschiedlichen Wegen den Zielgruppen bereitzustellen. Hierzu können aktive Komponenten wie Versand als E-Mail, Datenträgern oder Rundschreiben ebenso gehören wie die passive Publikation auf Webseiten und Portalen, wo sich die Zielgruppe aus dem Informationsangebot selbst bedient.

Die fertig geschnittenen Programme und Beiträge können - wie erwähnt - wiederum selbst in einer oder mehreren der Medien-Datenbanken abgespeichert werden, wo sie in einer hoch- und einem niedrig auflösenden Mediendatei zur Verfügung stehen können. Auf die fertig geschnitten Programme und Beiträge kann dann beispielsweise über ein mit einem "Ausstellungsraum" vergleichbares Medienportal zugegriffen werden. Dieser Ausstellungsraum kann als eine zusätzliche Softwarekomponente realisiert werden, mit der das hoch auflösende oder niedrig auflösende Material eines Programms oder Beitrags mit dem gewünschten Codec transcodiert wird. Beispielsweise ist es so möglich ein mit dem Medien-System gefertigtes Programm oder Beitrag in unterschiedlichen Formate zur Verfügung zu stellen und an die entsprechende Distributionsplattform (z. B. Facebook, YouTube, DVD, ...) anzupassen.

Wie bereits eingangs erwähnt, kann das Medien-System auch eine Vielzahl an Media-Streamboxen umfassen. In einer weiteren Ausführungsform der Erfindung werden diese Media-Streamboxen im Netzwerk synchronisiert und erzeugen aus dem jeweiligen eingehenden hoch auflösenden Mediendaten, mehrere hinsichtlich ihrer Identifikationscodes (z.B. Timecodes) synchron gehaltene Medienströme (jeweils in hoch- und niedriger Auflösung).

Ferner ist es möglich, dass die eingehenden Mediendaten aus verschiedenen Quellen in einem gemeinsamen Projekt (z.B. verschiedene Kameraeinstellungen bei einem Live-Event) zusammenzufassen. Dazu können die Media-Streamboxen die hoch auflösenden und niedrig auflösenden Medienströme eines Projekts alle mit der gleichen Projekt-Kennung (Projekt-ID) versehen. Mittels der Logging-Software können nun die Medienströme des Projekts (bzw. die niedrig auflösenden und hoch auflösenden Medienstrom-Paare) einzeln, in Gruppen oder alle zusammen mit Metadaten versehen werden. Ebenso ist es möglich, diesen Projekten Mediendaten anderer Quellen (z.B. Handkameras, Helikopter-Aufnahmen, Zeitlupen, Fotos, etc.), auch nachträglich oder noch während der Aufzeichnung dem Projekt hinzuzufügen, bzw. zu importieren. Dabei ist es vorteilhaft, wenn hinzugefügten Mediendaten ebenfalls über mit den anderen Mediendaten des Projekts synchronisierte Identifikationscodes besitzen, da sich so bereits vorhandene Metadaten auch mit den hinzugefügten Mediendaten verknüpfen lassen.

Das Schnittsystem des Medien-System (z.B. der Vorschnitt-Rechner und/oder der Fein-Schnitt-Rechner, oder ein kombiniertes Gerät, mit dem ein Programm/Beitrag fertig geschnitten werden kann) kann - wie in den zuvor beschriebenen Ausführungsformen - mittels der Metadaten entsprechende Inhalte, Schlagworte, etc. in den Mediendatenbank(en)/Speicherorten suchen und abfragen. Sind nun alle Medienströme des Projekts mit den gleichen Metadaten versehen, liefert ein entsprechende Suchanfrage Treffer in den Metadaten alle Medienströme des Projekts. Dem Benutzer können so alle niedrig auflösenden (bzw. je nach Implementierung des Schnittsystems auch die hoch auflösenden) Medienströme des Projekts zur Verfügung gestellt werden.

Sofern nur einzelne Medienströme oder eine Gruppe von Medienströmen in einem Projekt mit Metadaten versehen ist, kann die Schnittsoftware trotzdem mittels der Projekt-Kennung alle zu dem Projekt gehörenden Medienströme identifizieren und gegebenenfalls aus den Mediendatenbank(en)/Speicherorten laden. In einem Ausführungsbeispiel kann der Benutzer in einer graphischen Benutzeroberfläche der Schnittsoftware angeben, ob er für die Treffer seiner Suchanfrage neben den Medienströmen, deren Metadaten Such-Treffer enthalten auch die zusätzlichen Medienströme des Projekts erhalten will. Optional kann aber auch beim Anfordern eines Medienstroms für einen Treffer in der Suche angeben werden, ob die zugehörigen Medienströme des Projekts ebenfalls mit angefordert werden oder nicht. Entsprechend wird in dieser Anforderung die Projekt-Kennung angeben, damit beispielsweise der Medien-Zugriffs-Server die entsprechenden Medienströme aus den Mediendatenbank(en)/Speicherorten laden kann.

Die einzelnen Medienströme eines Projekts können von der Schnittsoftware auch in einem "Multi-Modus" angezeigt werden, bei dem die einzelnen Medienströme eines Projekts zeitlich synchronisiert auf einem Bildschirm dem Benutzer angezeigt werden. Mittels einer solchen Splitscreen-Darstellung (d.h. mehrere Bildfenster mit den jeweiligen gestreamten Bildinhalten und identischen Timecodes werden auf einem Bildschirm angezeigt) wird dieser Vorgang dargestellt, lassen sich so die entsprechenden Medienströme des Projekt einfach visualisieren, während beim "Single-Modus" lediglich ein Medienstrom auf dem Bildschirm visualisiert wird.

Das Medien-System erlaubt es ferner, dass auch Dritte auf die fertigen Programme und Beiträge zugreifen, bzw. die Mediendatenbanken und Metadaten-Datenbanken durchsuchen und Inhalte zur Anzeige bringen können. Da die Mediendaten auch in Form von niedrig auflösenden Medienströmen verschlagwortet zur Verfügung stehen, kann auf die Inhalte im Medien-System auch ohne Breitbandanschluss über das Netzwerk zugegriffen werden. Der Zugriff auf die Medieninhalte wird durch den Medien-Zugriffs-Server kontrolliert.

## Patentansprüche

1. Medien-System umfassend:
einer Transcodierungs-Vorrichtung, die vorzugsweise hoch auflösende Mediendaten empfängt und in einen Medienstrom mit niedriger Auflösung und einen Medienstrom mit hoher Auflösung umwandelt,
eine Logging-Vorrichtung, die den Medienstrom mit niedriger Auflösung und optional auch den Medientstrom mit hoher Auflösung empfängt, und dessen Mediendaten einem Benutzer zur Anzeige bringt,
wobei die Logging-Vorrichtung angepasst ist, unmittelbar auf den Medienstrom mit niedriger Auflösung zuzugreifen und optional auch auf den Medienstrom mit hoher Auflösung zuzugreifen, und einzelnen Bildern der Mediendaten Metadaten hinzuzufügen;
wobei die Transcodierungs-Vorrichtung den Medienstrom mit niedriger Auflösung und den Medienstrom mit hoher Auflösung mit einer identischen Medienstrom-Kennung versieht,
wobei die einzelnen einander entsprechenden Bilder der Mediendaten in den beiden Medienströmen durch die Transcodierungs-Vorrichtung mit einem identischen Identifikationscode versehen werden,
wobei die jeweiligen Metadaten zur Identifikation und Zuordnung der einzelnen Metadaten zu einzelnen Bildern einen Identifikationscode des entsprechenden Bilds aufweisen und die Metadaten mit Hilfe der Medienstrom-Kennung mit den Mediendaten verknüpft werden.

2. Medien-System nach Anspruch 1, wobei die Logging-Vorrichtung ferner eingerichtet ist, die Mediendaten als ganzes, einzelne Bildsequenzen oder Bilder davon mit Metadaten zu versehen; und
wobei die jeweiligen Metadaten zur Identifikation und Zuordnung der einzelnen Metadaten zu einzelnen Bildsequenzen Informationen zu den Identifikationscodes für das erste und letzte Bild einer Sequenz besitzen.

3. Medien-System nach Anspruch 1 oder 2, ferner umfassend:
eine erste Schnittvorrichtung, die den Medienstrom mit niedriger Auflösung und die zugehörigen Metadaten empfängt und einem Benutzer das Erstellen einer Schnittliste für den Schnitt der Mediendaten des Medienstroms mit niedriger Auflösung unter Verwendung der Metadaten ermöglicht.

4. Medien-System nach Anspruch 3, ferner umfassend:
einer zweiten Schnittvorrichtung, die mit Hilfe der Schnittliste für den Schnitt der Mediendaten die für den Schnitt der Mediendaten notwendigen Teile des Medienstroms mit hoher Auflösung über ein Netzwerk erhält, und einem Benutzer den Schnitt des Mediendaten basierend auf den erhaltenen Teilen des Medienstroms mit hoher Auflösung ermöglicht.

5. Medien-System nach Anspruch 3 oder 4,
wobei die erste Schnittvorrichtung in die Schnittliste die Medienstrom-Kennung des Medienstroms mit niedriger Auflösung einfügt, um dem der zweiten Schnittvorrichtung zu ermöglichen, den korrespondierenden Medienstrom mit hoher Auflösung zu empfangen.

6. Medien-System nach einem der Ansprüche 3 bis 5,
wobei die durch die erste Schnittvorrichtung erzeugte die Schnittliste die Teile des Medienstroms mit Hilfe von Identifikationscodes der Bilder identifiziert.

7. Medien-System nach einem der Ansprüche 3 bis 6, wobei die erste Schnittvorrichtung einen Schnitt basierend auf Schlagworten und Kennzeichnungen in den Metadaten erlaubt und diese für die Erzeugung der Schnittliste in Identifikationscodes der Bilder umsetzt, um Teile des Medienstroms zu identifizieren.

8. Medien-System nach einem der Ansprüche 1 bis 7, wobei der Medienstrom mit niedriger Auflösung eine niedrige Bitrate aufweist, vorzugsweise im Bereich 0,5 MBit/s bis 2 MBit/s.

9. Medien-System nach einem der Ansprüche 1 bis 8,
wobei der Medienstrom mit hoher Auflösung eine hohe Bitrate aufweist, vorzugsweise 50 MBit/s oder höher.

10. Medien-System nach einem der Ansprüche 1 bis 9, ferner umfassend eine oder mehrere Metadaten-Datenbanken, die die Metadaten über ein Netzwerk empfangen und speichern und/oder eine oder mehrere Medien-Datenbanken, die die beiden durch die Transcodierungs-Vorrichtung erzeugten Medienströme über ein Netzwerk empfangen und speichern.

11. Medien-System nach einem der Ansprüche 1 bis 10, wobei die Logging-Vorrichtung ferner angepasst ist, Messdaten von einem Messdatensystem zu empfangen, die als Metadaten der Mediendaten in einer oder mehreren Metadaten-Datenbanken gespeichert werden,
wobei die Messdaten Identifikationscodes besitzen mit deren Hilfe sie den Bildern der Mediendaten zuordenbar sind.

12. Medien-System nach einem der Ansprüche 1 bis 11, wobei die Logging-Vorrichtung angepasst ist, auch den Medienstrom mit hoher Auflösung zu empfangen und dessen Mediendaten einem Benutzer zur Anzeige zu bringen,
wobei die einzelnen Metadaten mit Hilfe der Identifikationscodes einzelnen Bildsequenzen oder Bildern des Medienstroms mit hoher Auflösung zugeordnet werden, und
wobei die Logging-Vorrichtung angepasst ist, unmittelbar nach Vorliegen der ersten Teile des Medienstroms mit hoher Auflösung auf diesen zuzugreifen und mit Metadaten zu versehen.

13. Medien-System nach einem der Ansprüche 1 bis 12, wobei die Transcodierungs-Vorrichtung Mediendaten eines Projekts aus unterschiedlichen Quellen empfängt, die Mediendaten jeweils in einen Medienstrom mit niedriger Auflösung und einen Medienstrom mit hoher Auflösung umwandelt und mit einer Projekt-Kennung versieht,
wobei die Transcodierungs-Vorrichtung die einzelnen einander entsprechenden Bilder eines Teils oder aller der Medienströme mit niedriger Auflösung und hoher Auflösung des Projekts mit einer identischen Medienstrom-Kennung versieht, um die Metadaten mit den dem Teil oder allen Medienströmen mit niedriger Auflösung und hoher Auflösung des Projekts zu verknüpfen.

14. Medien-System nach einem der Ansprüche 1 bis 13, wobei das Medien-System angepasst ist, mittels der Metadaten eine Suche nach einzelnen Bildsequenzen oder Bildern in den Medienströmen zu ermöglichen, wobei die einzelnen Bildsequenzen oder Bilder in den Medienströmen mittels der Medienstrom-Kennung und Identifikationscodes identifiziert werden.

15. Verfahren zur Bearbeitung von Mediendaten umfassend die Schritte:
Empfangen von vorzugsweise hoch auflösendem Mediendaten in einer Transcodierungs-Vorrichtung,
Umwandeln der Mediendaten in einen oder mehrere Medienströme mit niedriger Auflösung und einen oder mehrere Medienströme mit hoher Auflösung durch die Transcodierungs-Vorrichtung,
Versehen der beiden Medienströme mit einer identischen Medienstrom-Kennung durch die Transcodierungs-Vorrichtung,
Hinzufügen eines identischen Identifikationscodes in die einzelnen einander entsprechenden Bilder der Mediendaten in die beiden Medienströme durch die Transcodierungs-Vorrichtung,
Empfangen des Medienstroms mit niedriger Auflösung und optional auch des Medientstroms mit hoher Auflösung in der Logging-Vorrichtung;
Anzeigen der Mediendaten des Medienstroms mit niedriger Auflösung durch die Logging-Vorrichtung,
Hinzufügen von Metadaten zu einzelnen Bildern der Mediendaten in der Logging-Vorrichtung;
wobei die jeweiligen Metadaten zur Identifikation und Zuordnung der einzelnen Metadaten zu einzelnen Bildern einen Identifikationscode des entsprechenden Bilds besitzen und die Metadaten mit Hilfe der Medienstrom-Kennung mit den Mediendaten verknüpft werden;
wobei die Logging-Vorrichtung unmittelbar nach Vorliegen der ersten Teile des niedrig auflösenden Medienstroms auf diesen zugreifen und mit Metadaten versehen kann.

## Claims

1. A media system comprising:
a transcoding apparatus which receives preferably high resolution media data and converts these into a media stream with low resolution and a media stream with high resolution,
a logging apparatus which receives the media stream with low resolution and optionally also the media stream with high resolution, and displays the media data thereof to a user,
wherein the logging apparatus is further configured to instantly accesses the media stream with low resolution and optionally to access also the media stream with high resolution, and to add metadata to individual images of the media data;
wherein the transcoding apparatus provides the low resolution media stream and the high resolution media stream with an identical media stream identifier,
wherein individual corresponding images of the media data in the two media streams are provided with an identical identification code by the transcoding device,
the respective metadata having an identification code of the corresponding image for identifying and assigning the individual metadata to individual images, and the metadata being linked to the media data by means of the media stream identifier.

2. The media system according to claim 1, wherein the logging device is further configured to provide metadata to the media data as a whole, individual image sequences or images thereof; and
the respective metadata having information on the identification codes for the first and last image of a sequence for identifying and assigning the individual metadata to individual image sequences.

3. The media system according to claim 1 or 2 further comprising:
a first cutting device receiving the low resolution media stream and associated metadata and enabling a user to create an cutting list for cutting the media data of the low resolution media stream using the metadata.

4. The media system according to claim 3, further comprising:
a second cutting device which, by means of the cutting list for cutting the media data, obtains via a network the parts of the high resolution media stream necessary for cutting the media data, and enables a user to cut the media data based on the obtained parts of the high resolution media stream.

5. The media system according to claim 3 or 4,
wherein the first cutting device inserts the media flow identifier of the low resolution media flow into the cutting list to enable the second cutting device to receive the corresponding high resolution media flow.

6. The media system according to one of claims 3 to 5,
wherein the cutting list generated by the first cutting device identifies the parts of the media stream by means of identification codes of the images.

7. The media system according to one of claims 3 to 6, wherein the first cutting device permits cutting based on keywords and markings in the metadata and converts them into identification codes of the images for generating the cutting list to identify portions of the media stream.

8. The media system according to one of claims 1 to 7, wherein the low resolution media stream has a low bit rate, preferably in the range of 0.5 Mbps to 2 Mbps.

9. The media system according to one of claims 1 to 8, wherein said high resolution media stream having a high bit rate, preferably 50 MBit/s or higher.

10. The media system according to one of claims 1 to 9, further comprising one or more metadata databases which receive the metadata via a network and store the metadata and/or one or more media databases which receive via a network and store the two media streams generated by the transcoding device.

11. The media system according to one of claims 1 to 10, wherein the logging device is further configured to receive measurement data from a measurement data system stored as metadata of the media data in one or more metadata databases,
the measurement data having identification codes by means of which they can be assigned to the images of the media data.

12. The media system according to one of claims 1 to 11, wherein the logging device is configured to also receive the media stream with high resolution and to display its media data to a user,
the individual metadata being assigned, by means of the identification codes, to individual image sequences or images of the media stream with high resolution, and
wherein the logging device is configured to access the first parts of the high resolution media stream immediately after they are present and to provide metadata to the first parts of the high resolution media stream.

13. The media system according to one of claims 1 to 12, wherein the transcoding apparatus receives media data of a project from different sources, converts the respective media data into a low resolution media stream and a high resolution media stream and provides them with a project identifier,
the transcoding apparatus providing the individual corresponding images of a part or all of the low resolution and high resolution media streams of the project with an identical media stream identifier to associate the metadata with said part or all of the low resolution and high resolution media streams of the project.

14. The media system according to one of claims 1 to 13, the media system being configured to enable a search for individual image sequences or images in the media streams by means of the metadata, the individual image sequences or images in the media streams being identified by the media stream identifier and identification codes.

15. A method for processing media data comprising the steps of:
receiving preferably high resolution media data at a transcoding device,
with the transcoding device, converting the media data into one or more low resolution media streams and one or more high resolution media streams,
with the transcoding device, providing the two media streams with an identical media stream identifier,
by the transcoding device, adding an identical identification code to each corresponding image of the media data in the two media streams,
receiving the low resolution media stream and optionally the high resolution media stream at the logging device;
with the logging device, displaying the media data of the low resolution media stream,
with the logging device, adding metadata to individual images of the media data;
wherein the respective metadata have an identification code of the corresponding image for identifying and associating the individual metadata with individual images, the metadata being associated with the media data using the media stream identifier;
the logging device being able to access the first parts of the low resolution media stream immediately after they are present and to provide them with metadata.

## Revendications

1. Système de médias comprenant :
un dispositif de transcodage, qui reçoit de préférence des données de médias à haute résolution et qui les convertit en un flux de médias à faible résolution et un flux de médias à haute résolution,
un dispositif de connexion qui reçoit le flux de médias à faible résolution et, en option, également le flux de médias à haute résolution et affiche leurs données de médias à l'attention d'un utilisateur,
le dispositif de connexion étant conçu pour accéder directement au flux de médias à faible résolution et, en option, également au flux de médias à haute résolution et pour ajouter certaines images des données de médias aux métadonnées ;
le dispositif de transcodage munissant le flux de médias à faible résolution et le flux de médias à haute résolution d'un identifiant de flux de médias identique,
les différentes images, correspondant entre elles, des données de médias dans les deux flux de médias étant munies, par le dispositif de transcodage, d'un code d'identification identique,
les métadonnées respectives pour l'identification et l'attribution des différentes métadonnées aux différentes images comprenant un code d'identification de l'image correspondante et les métadonnées étant associées aux données de médias à l'aide de l'identifiant de flux de médias.

2. Système de médias selon la revendication 1, le dispositif de connexion étant en outre conçu pour munir les données de médias dans leur ensemble, différentes séquences d'images ou des images de celles-ci, de métadonnées ; et
les métadonnées respectives pour l'identifiant et l'attribution des différentes métadonnées aux différentes séquences d'images comprenant des informations concernant les codes d'identification pour les première et dernière images d'une séquence.

3. Système de médias selon la revendication 1 ou 2, comprenant en outre :
un premier dispositif de coupe qui reçoit le flux de médias à faible résolution et les métadonnées correspondantes et qui permet à l'utilisateur d'établir une liste de coupe pour la coupe des données de médias du flux de médias à faible résolution à l'aide des métadonnées.

4. Système de médias selon la revendication 3, comprenant en outre :
un deuxième dispositif de coupe qui obtient, à l'aide de la liste de coupe pour la coupe des données de médias, les parties nécessaires pour la coupe des données de médias du flux de médias à haute résolution par l'intermédiaire d'un réseau et qui permet à un utilisateur de couper les données de médias sur la base des parties obtenues du flux de médias à haute résolution.

5. Système de médias selon la revendication 3 ou 4,
le premier dispositif de coupe insérant, dans la liste de coupe, l'identifiant de flux de médias du flux de médias à faible résolution afin de permettre au deuxième dispositif de coupe de recevoir le flux de médias à haute résolution correspondant.

6. Système de médias selon l'une des revendications 3 à 5,
la liste de coupe générée par le premier dispositif de coupe identifiant les parties du flux de médias à l'aide de codes d'identification des images.

7. Système de médias selon l'une des revendications 3 à 6, le premier dispositif de coupe permettant une coupe sur la base de mots-clés et de repères dans les métadonnées et convertissant ceux-ci en codes d'identification des images pour la génération de la liste de coupe, afin d'identifier des parties du flux de médias.

8. Système de médias selon l'une des revendications 1 à 7, le flux de médias à faible résolution présentant un débit binaire faible, de préférence de l'ordre de 0,5 Mbit/s à 2 Mbit/s.

9. Système de médias selon l'une des revendications 1 à 8, le flux de médias à haute résolution présentant un débit binaire élevé, de préférence de 50 Mbit/s ou plus.

10. Système de médias selon l'une des revendications 1 à 9, comprenant en outre une ou plusieurs bases de données de métadonnées qui reçoivent et enregistrent les métadonnées par l'intermédiaire d'un réseau et/ou une ou plusieurs bases de données de médias qui reçoivent et enregistrent les deux flux de médias générés par le dispositif de transcodage par l'intermédiaire d'un réseau.

11. Système de médias selon l'une des revendications 1 à 10, le dispositif de connexion étant en outre conçu pour recevoir des données de mesure d'un système de données de mesure, qui sont enregistrées sous la forme de métadonnées des données de médias dans une ou plusieurs bases de données de métadonnées,
les données de mesure comprenant des codes d'identification à l'aide desquels elles peuvent être attribuées aux images des données de médias.

12. Système de médias selon l'une des revendications 1 à 11, le dispositif de connexion étant conçu pour recevoir également le flux de média à haute résolution et pour afficher ses données de média à l'attention d'un utilisateur,
les différentes métadonnées étant attribuées, à l'aide des codes d'identification, à différentes séquences d'images ou images du flux de média à haute résolution et
le dispositif de connexion étant conçu, directement après la mise à disposition des premières parties du flux de média à haute résolution, pour accéder à celles-ci et pour les munir de métadonnées.

13. Système de médias selon l'une des revendications 1 à 12, le dispositif de transcodage recevant des métadonnées d'un projet constitué de différentes sources, convertissant les métadonnées respectivement en un flux de médias à faible résolution et un flux de médias à haute résolution et les munissant d'un identifiant de projet,
le dispositif de transcodage munissant les différentes images, correspondant entre elles, d'une partie ou de tous les flux de médias à faible résolution et à haute résolution du projet, d'un identifiant de flux de média identique afin d'associer les métadonnées avec la partie ou tous les flux de médias à faible résolution et à haute résolution du projet.

14. Système de médias selon l'une des revendications 1 à 13, le système de médias étant conçu pour permettre, au moyen des métadonnées, une recherche de différentes séquences d'images ou d'images dans les flux de médias, les différentes séquences d'images ou images dans les flux de médias étant identifiées au moyen de l'identifiant de flux de média et des codes d'identification.

15. Procédé de traitement de données de médias comprenant les étapes suivantes :
réception de préférence de données de médias à haute résolution dans un dispositif de transcodage,
conversion des données de médias en un ou plusieurs flux de médias à faible résolution et en un ou plusieurs flux de médias à haute résolution par le dispositif de transcodage,
ajout aux deux flux de médias d'un identifiant de flux de média par le dispositif de transcodage,
ajout d'un code d'identification identique dans les différentes, correspondant entre elles, des données de médias, dans les deux flux de médias par le dispositif de transcodage,
réception du flux de médias à faible résolution et, en option, également du flux de médias à haute résolution dans un dispositif de connexion ;
affichage des données de médias du flux de médias à faible résolution par le dispositif de connexion,
ajout de métadonnées à différentes images des données de médias dans le dispositif de connexion ;
les métadonnées respectives comprenant, pour l'identification et l'attribution des différentes métadonnées à différentes images, un code d'identification de l'image correspondante et les métadonnées étant associées avec les données de médias à l'aide de l'identifiant de flux de média ;
le dispositif de connexion, directement après la mise à disposition des premières parties du flux de média à haute résolution, pouvant accéder à celles-ci et les munir de métadonnées.
